# EUROPÄISCHE PATENTSCHRIFT

(11) **EP 0 491 766 B1**
(45) Veröffentlichungstag und Bekanntmachung des Hinweises auf die Patenterteilung: **14.06.1995**
(21) Anmeldenummer: 90913405.8
(22) Anmeldetag: 06.09.1990
(51) Int. Cl.: H02M 1/12

(54) **SCHALTUNGSANORDNUNG BEI EINEM GESTEUERTEN STROMRICHTER**
CIRCUIT FOR A CONTROLLED POWER CONVERTER
CIRCUIT POUR CONVERTISSEUR COMMANDE

(30) Priorität: 11.09.1989 AT 2120/89
(43) Veröffentlichungstag der Anmeldung: 01.07.1992
(73) Patentinhaber: ELIN ENERGIEANWENDUNG GESELLSCHAFT M.B.H., A-1141 Wien (AT)
(72) Erfinder: KUFNER, Herwig, Dipl.-Ing., A-1150 Wien (AT); PROKISCH, Günther, A-1238 Wien (AT)
(74) Vertreter: Krause, Peter
(86) Internationale Anmeldenummer: AT9000088
(87) Internationale Veröffentlichungsnummer: WO9103861

(56) Entgegenhaltungen:
- DE-A- 3 725 515
- DE-A- 3 832 922
- PESC'87 record 1987, Blacksburg, Virginia, USA & Nagaoka: "A study of activefilters using quad-series voltage source PWM convertersfor harmoniccompensation" siehe Seite 207, rechte Spalte; Figuren 1, 6

## Beschreibung

Die Erfindung betrifft eine Schaltungsanordnung zur Kompensation von durch einen gesteuerten Stromrichter, vorzugsweise einem Vier-Quadrantensteller, erzeugten Netzrückwirkungen bzw. Störströmen im speisenden Netz, wobei dem Stromrichter eingangsseitig ein gesteuerter und rückspeisefähiger Hilfsstromrichter parallel geschaltet ist und bei beiden Stromrichtern eingangsseitig ein Strommeßorgan vorgesehen ist, von denen mindestens eines mit einem Stromregler verbunden ist und dem Hilfsstromrichter auf der Gleichspannungsseite ein Parallelkondensator angeschlossen ist.

Der Betrieb von Stromrichtern belastet das speisende Netz im allgemeinen mit unerwünschter Verschiebungs- und Verzerrungsblindleistung. Abgesehen von der zusätzlichen Strombelastung aller Komponenten bis hin zu den Generatoren, können, vorwiegend durch Stromharmonische, bzw. durch die von ihnen hervorgerufenen Spannungsverzerrungen, andere am gleichen Netz hängende Verbraucher negativ beeinflußt werden. Ein solcher Fall ist z.B. bei Bahnnetzen die Beeinflussung der Signalanlagen durch höherfrequente Anteile im Schienenrückstrom.
Auch bei Fernmeldeleitungen die über eine Wegstrecke parallel zu Starkstromleitungen geführt sind, kommt es durch Oberschwingungen höherer Ordnung in der Starkstromleitung und wegen der nicht zu vermeidenden Kopplung der Leitungen zur störenden Beeinflussung der Nachrichtenübertragung. Speziell beim Betrieb von Stromrichtern, die über die Starkstromleitung gespeist werden, treten infolge der Kommutierungsvorgänge stark oberwellenhaltige Schwingungen auf. Wie schon erwähnt, werden besonders Bahnnetze belastet, wenn die Fahrzeugmotoren über Stromrichter gespeist werden.

Es ist bekannt, einerseits "netzfreundliche" Stromrichterschaltungen zu verwenden und andererseits die trotzdem unvermeidlichen Störströme durch Saugkreise am Ort der Entstehung kurzzuschließen. Diese Maßnahmen sind aber nicht immer ausreichend bzw. anwendbar.

Eine Anordnung mit einem Saugkreis zur Reduzierung von Störströmen bei Stromrichtern ist der AT-PS 373 448 zu entnehmen. Diese weist parallel zu Drossel und Widerstand einer RLC-Serienschaltung, die an der einen Stromrichter speisenden Wechselspannung liegt, eine weitere Drossel-Widerstand-Serienschaltung auf. Die RL-Serienschaltung in diesem verlustbehafteten Saugkreis ist so ausgelegt, daß die eine Fernmeldeeinrichtung störenden Oberschwingungen herausgefiltert werden.

Eine Netzfilteranordnung für einen Pulsstromrichter ist in der AT-PS 371 955 beschrieben. Diese besteht aus einer Längsinduktivität und einem Parallelkondensator zwischen dem Stromrichter und einem vorgeschalteten Transformator. Die Resonanzfrequenz des LC-Filters liegt dabei zwischen der Grundfrequenz des Wechselstromes und der Pulsfrequenz des Stromrichers.

Aus der DE-OS 37 25 515 ist ein Löschverfahren für steuerbare Stromrichter bekannt, durch welches nur minimale Oberschwingungen im Netz auftreten. Dies wird dadurch erreicht, daß parallel zum Stromrichter wechselspannungsseitig ein zweiter selbstgeführter Stromrichter mit eingeprägter Gleichspannung angeschlossen ist, der so betrieben wird, daß er die steuerbaren Halbleiter des anderen Stromrichters zu einem vorgegebenen Zeitpunkt löscht. Eine besondere Anordnung zur Steuerung der beiden Stromrichter entsprechend dem Löschverfahren ist in dieser Druckschrift nicht angegeben.

In der DE-OS 38 32 922 ist eine Vorrichtung zur Energieumformung mit einer Filterung der harmonischen Komponenten dargestellt. Diese umfaßt einen ersten Energieumformer, eine Einrichtung zum Feststellen der Ausgangssignale des Energieumformers, eine Einrichtung zum Auswählen von zu beseitigenden höheren harmonischen Komponenten und einen zweiten Energieumformer zum Löschen der ausgewählten harmonischen Komponenten. Mit dieser Anordnung können nur bestimmte harmonische Oberschwingungsströme kompensiert werden. Es erfolgt hier keine Erfassung der Momentanabweichung des Hauptstromistwertes von seinem Sollwert, die jedoch für eine vollkommene Kompensation der Harmonischen maßgebend ist.
Weiters wird bei der Vorrichtung in der letztgenannten Druckschrift nicht die Fehlerstromabweichung von einer Summierstelle als Sollwert für die Stromsteuerung des Hilfsumrichters benutzt.

Die Aufgabe der Erfindung besteht nun darin, mit einer speziellen Regelanordnung für die beiden Stromrichter die oberschwingungshaltige Belastung des speisenden Wechselstromnetzes und damit verbundene Resonanzerscheinungen noch wesentlich besser herabzusetzen bzw. völlig zu vermeiden.

Die Aufgabe wird durch die Erfindung gelöst, welche dadurch gekennzeichnet ist, daß die Halbleiter des Hilfsstromrichters für mindestens die fünffache Schaltfrequenz als die Halbleiter des Stromrichters ausgelegt sind, und daß jedes Strommeßorgan mit einer Summierungsstelle verbunden ist, die an einem Stromregler angeschlossen ist, der ausgangsseitig mit einer Steuerung, vorzugsweise einem Gittersteuersatz, für die Halbleiter der Stromrichter verbunden ist, und daß der Ausgang eines Multiplizierers an die Summierungsstelle beim Stromrichter angeschlossen ist, wobei der Multiplizierer den Betrag eines Stromsollwertes mit einem Referenzsinus, welcher mit der an den Stromrichtern angelegten Wechselspannung synchronisiert ist, verknüpft, und daß der Eingang des Stromreglers beim Stromrichter, an dem die Soll-Istwert-Differenz auftritt, mit einem Invertierer verbunden ist, dessen Ausgang an die Summierungsstelle beim Hilfsstromrichter angeschlossen ist, und daß die Summierungsstelle beim Hilfsstromrichter mit dem Ausgang eines Multiplizierers verbunden ist, an welchen der Ausgang eines Spannungsreglers angeschlossen ist, wobei der Multiplizierer das Referenzsinussignal und das Ausgangssignal des Spannungsreglers verknüpft, und daß der Eingang des Spannungsreglers mit dem Ausgang einer Verknüpfungsstelle verbunden ist, welche die Differenz von zwei Spannungen bildet, von denen eine Spannung jene an dem Parallelkondensator beim Hilfsstromrichter ist und die andere Spannung ein Sollwert für diese Spannung ist. Durch die erfindungsgemäße Anordnung werden im Gegensatz zu abgestimmten Saugkreisen nicht nur bestimmte Frequenzanteile in den Störströmen abgesaugt, sondern im Rahmen der durch die maximale Schaltfrequenz des Hilfsstromrichters gegebenen Grenzen kann jede beliebige Kurvenform kompensiert werden. Es ist sogar möglich durch Abgabe bzw. Aufnahme von zusätzlichen Blindstromanteilen das Netzverhalten der Gesamtanlage grundsätzlich zu verbessern, z.B. Annäherung an die Sinusform, sowie Phasenschieben. Durch den dem einen Stromregler unterlagerten Spannungsregler ist eine beliebige Belastung des Ausganges des Hilfsstromrichters bzw. bei einem dem Hilfsstromrichter nachgeschalteten Wechselrichter, des Zwischenkreises mit Wirkleistung möglich, welche aus dem Netz bezogen wird. Ein Energiefluß im Hilfsstromrichter ist in beiden Richtungen möglich.

Nach einer Ausgestaltung der Erfindung sind die beiden Stromrichter eingangsseitig an je eine Sekundärwicklung eines Transformators angeschlossen, dessen Primärwicklung z.B. an der Fahrleitungsspannung eines Bahnnetzes liegt. Bei Verwendung der erfindungsgemäßen Schaltungsanordnung als Bahnantrieb wirkt sich der Stromrichtertransformator sehr platzsparend aus. Dies ist dort aufgrund des geringen Platzangebotes besonders wichtig.

Von Vorteil ist, daß dem Hilfsstromrichter entweder ein Gleichstromverbraucher oder ein Wechselrichter mit nachfolgendem Verbraucher nachgeschaltet ist. Über den Hilfsstromrichter können auch gleichzeitig Zusatzeinrichtungen versorgt werden, wodurch zusätzliche Stromrichter eingespart werden. Vor allem bei einem Einsatz der Schaltung als Bahnantrieb ist dies von Vorteil.

Nachfolgend wird anhand der Zeichnung die Erfindung noch näher erläutert.

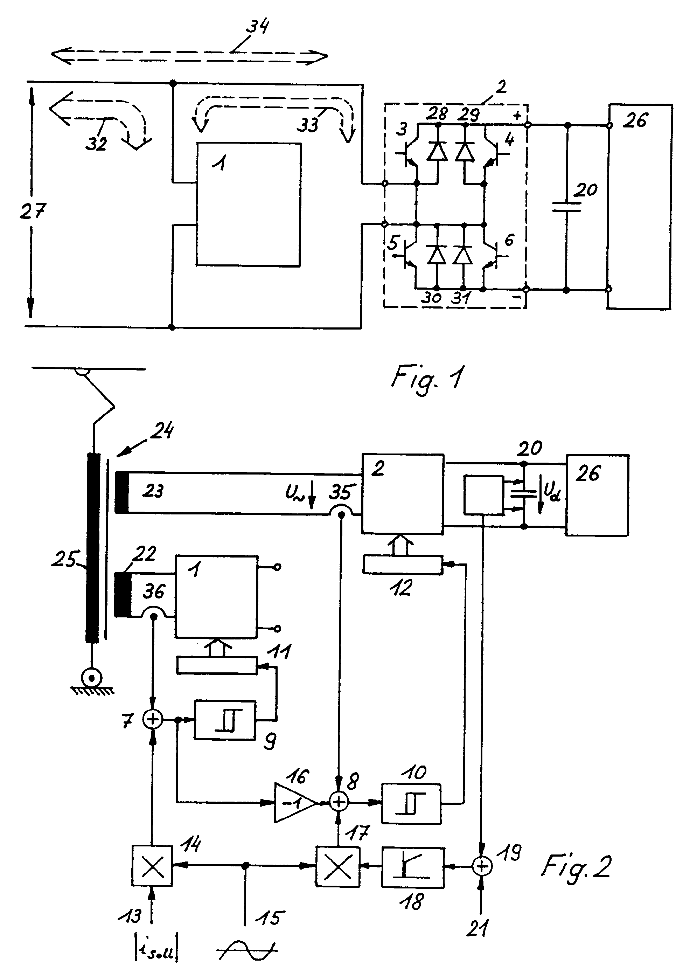

Das Blockschaltbild in Fig. 1 zeigt den Grundaufbau des Leistungsteiles der Schaltungsanordnung und Fig. 2 stellt die Schaltungsanordnung inklusive Steuer- und Regelungsteil bei einem Einsatz als Bahnantrieb dar.

Bei Fig. 1, die eine einphasige Darstellung zeigt, wird der Stromrichter 1, der z. B. ein Vier-Quadrantensteller ist, vom Wechselstromnetz 27 versorgt. Parallel zu diesem ist der Hilfsstromrichter 2, den man auch als Kompensationsstromrichter bezeichnen könnte, angeordnet. Dieser besteht aus vier schnell schaltenden Transistoren 3, 4, 5, 6 in Brückenschaltung, wobei jeder Transistor 3, 4, 5, 6 antiparallel eine Diode 28, 29, 30, 31 aufweist. An der Gleichspannungsseite des Hilfsstromrichters 2 ist einerseits ein Speicherkondensator 20 und andererseits entweder ein Gleichstromverbraucher oder ein Wechselrichter 26 angeschlossen. In dieser Fig. sind auch noch mit Doppelpfeilen die einzelnen Ströme eingezeichnet, wobei einer den Nutzstrom 32 des Stromrichters 1, der zweite den vom Stromrichter 1 erzeugten Störstrom 33 und der dritte den Nutzstrom 34 für den Verbraucher darstellt.

Der Hilfsstromrichter 2 wird bei der beschriebenen Anordnung so betrieben, daß der Strom bzw. Kompensationsstrom des Hilfsstromrichters 2, vorzugsweise-in einer Toleranzbandregelung, einem Stromsollwert nachgeführt wird, der den gewünschten Einfluß u.zw. die Eliminierung der Störströme 33 auf das Netz hat. Der Blindleistungsaustausch erfolgt dabei zwischen dem Speicherkondensator 20 und dem Stromrichter 1 bzw. dem Netz 27. Gleichzeitig kann auch ein Wirkleistungsanteil in die Berechnung des Sollstromes einbezogen werden und am Speicherkondensator 20 ein Gleichstromverbraucher oder -generator angeschlossen werden.

Bei dem ebenfalls einphasigen Schaltungsaufbau in Fig. 2 liegt die Primärwicklung 25 eines Transformators 24 an der Fahrleitungsspannung eines Bahnnetzes, die einige kV beträgt. Der Transformator 24 besitzt zwei Sekundärwicklungen 22, 23 an die je ein Stromrichter angeschlossen ist. Der Stromrichter 1 ist der Hauptstromrichter, über welchen die Bahnmotoren gespeist werden und der Stromrichter 2 ist der Hilfsstrom- bzw. Kompensationsstromrichter, der mit sehr schnell schaltenden Halbleitern aufgebaut ist. Diese müssen um ca. 5 - 10 mal schneller schalten können als jene des Stromrichters 1. Die beiden Sekundärwicklungen 22, 23 des Transformators 24 sind selbstverständlich an das Spannungsniveau der Stromrichter 1, 2 angepaßt. da hier beide Stromrichter 1, 2 Vierquadrantensteller sind und als Hochsetzer arbeiten, gilt als wichtige Randbedingung, daß bei allen vorkommenden Netzspannungsamplituden U_{d} > Û_{∼} sein muß.

Beide Stromrichter 1, 2 weisen auf der Wechselspannungsseite je ein Strommeßorgan 35, 36 zur Istwerterfassung auf. Jeder Istwert wird einer Summierungsstelle 7, 8 zugeführt, wobei an die Summierungsstelle 7 noch der Betrag eines Stromsollwertes 13, verknüpft mit einem Referenzsinus 15 in einem Multiplizierer 14 gelangt. Die Differenz aus diesen beiden Signalen wird einerseits einem Stromregler 9 und andererseits über einen Invertierer 16 der Summierungsstelle 8 als Sollwert zugeführt. An diese Summierungsstelle 8 gelangt auch das Ausgangssignal eines Multiplizierers 17, der den Referenzsinus 15 mit dem Ausgangssignal eines als Zwischenkreisspannungsregler für den Hilfsstromrichter 2 arbeitenden PI-Reglers 18 verknüpft. Eingangsseitig erhält dieser PI-Regler 18 die Differenz aus einem Zwischenkreisspannungssollwert 21 und dem an einem Kondensator 20 bei der Gleichspannungsseite des Hilfsstromrichters 2 gemessenen Istwert. Dem Hilfsstromrichter 2 ist ein Wechselrichter 26 für die Versorgung der Hilfsbetriebe in z. B. einer Wechselstromlokomotive nachgeschaltet.
Die Ausgänge der beiden Stromregler 9, 10 sind noch mit je einer Steuerung 11, 12 für die Halbleiter der beiden Stromrichter 1, 2 verbunden.

Die oben beschriebene Schaltung ist somit eine aktive Störstromkompensation auf einer elektrischen Wechselstromlokomotive bei gleichzeitiger Nutzung des Hilfsstromrichters 2 als Versorgungseinheit für die Hilfsbetriebe.

Nachfolgend wird nun noch die Funktion der in Fig. 2 dargestellten Schaltung erläutert.
Die Steuerung des Stromrichters 1 erfolgt hier so, daß in der nicht dargestellten zugehörenden Steuerelektronik ein Netzstromsollwert errechnet wird, der vorzugsweise ohne Phasenverschiebung auf die Fahrleitungsspannung synchronisiert wird. Der Stromregler 9, ein Zweipunktregler, sorgt dafür, daß der Stromistwert innerhalb eines Bandes um diesen Sollwert geführt wird. Die Momentanabweichungen sind dann die unerwünschten Störströme, die zusätzlich zur Grundschwingung in der Fahrleitung bzw. in den Schienen fließen.

Die Soll-Istwert Differenz aus dem Stromregelkreis des Stromrichters 1 bzw. Traktionsstromrichters wird invertiert und als Sollwert dem Stromregler 10 des Hilfsstromrichters 2 zugeführt und gleichfalls in einer Strombandregelung verarbeitet. Unterlagert arbeitet der Zwischenkreisspannungsregler 18, dessen Ausgangsspannung, multipliziert mit einem zur Fahrleitungsspannung synchronen Referenzsinus 15, der ebenfalls aus der Steuerelektronik des Stromrichters 1 bezogen wird, zum Kompensationssollwert addiert wird.

Der Stromrichter 1 und der Hilfsstromrichter 2 könnten auch als Wechselrichter arbeiten, wobei die Eingangsspannung dann natürlich eine Gleichspannung wäre.

Abschließend ist noch zu erwähnen, daß die Schaltungsanordnung auch für Drehstrom- bzw. allgemein für Mehrphasennetze verwendet werden kann.

## Patentansprüche

1. Schaltungsanordnung zur Kompensation von durch einen gesteuerten Stromrichter, vorzugsweise einem Vier-Quadrantensteller, erzeugten Netzrückwirkungen bzw. Störströmen im speisenden Netz, wobei dem Stromrichter eingangsseitig ein gesteuerter und rückspeisefähiger Hilfsstromrichter parallel geschaltet ist und bei beiden Stromrichtern eingangsseitig ein Strommeßorgan vorgesehen ist, von denen mindestens eines mit einem Stromregler verbunden ist und dem Hilfsstromrichter auf der Gleichspannungsseite ein Parallelkondensator angeschlossen ist, **dadurch gekennzeichnet**, daß die Halbleiter (3, 4, 5, 6) des Hilfsstromrichters (2) für mindestens die fünffache Schaltfrequenz als die Halbleiter des Stromrichters (1) ausgelegt sind, und daß jedes Strommeßorgan (35, 36) mit einer Summierungsstelle (7, 8) verbunden ist, die an einem Stromregler (9, 10) angeschlossen ist, der ausgangsseitig mit einer Steuerung (11, 12), vorzugsweise einem Gittersteuersatz, für die Halbleiter der Stromrichter (1, 2) verbunden ist, und daß der Ausgang eines Multiplizierers (14) an die Summierungsstelle (7) beim Stromrichter (1) angeschlossen ist, wobei der Multiplizierer (14) den Betrag eines Stromsollwertes (13) mit einem Referenzsinus (15), welcher mit der an den Stromrichtern (1, 2) angelegten Wechselspannung synchronisiert ist, verknüpft, und daß der Eingang des Stromreglers (9) beim Stromrichter (1), an dem die Soll-Istwert-Differenz auftritt, mit einem Invertierer (16) verbunden ist, dessen Ausgang an die Summierungsstelle (8) beim Hilfsstromrichter (2) angeschlossen ist, und daß die Summierungsstelle (8) beim Hilfsstromrichter (2) mit dem Ausgang eines Multiplizierers (17) verbunden ist, an welchen der Ausgang eines Spannungsreglers (18) angeschlossen ist, wobei der Multiplizierer (17) das Referenzsinussignal (15) und das Ausgangssignal des Spannungsreglers (18) verknüpft, und daß der Eingang des Spannungsreglers (18) mit dem Ausgang einer Verknüpfungsstelle (19) verbunden ist, welche die Differenz von zwei Spannungen bildet, von denen eine Spannung jene an dem Parallelkondensator (20) beim Hilfsstromrichter (2) ist und die andere Spannung ein Sollwert (21) für diese Spannung ist.

2. Schaltungsanordnung nach Anspruch 1, **dadurch gekennzeichnet**, daß die beiden Stromrichter (1, 2) eingangsseitig an je eine Sekundärwicklung (22, 23) eines Transformators (24) angeschlossen sind, dessen Primärwicklung (25) z.B. an der Fahrleitungsspannung eines Bahnnetzes liegt.

3. Schaltungsanordnung nach Anspruch 1 oder 2, **dadurch gekennzeichnet**, daß dem Hilfsstromrichter (2) entweder ein Gleichstromverbraucher oder ein Wechselrichter (26) mit nachfolgendem Verbraucher nachgeschaltet ist.

## Claims

1. Circuit for the compensation of reactions to the mains supply system or disturbance currents created by a controlled current rectifier, especially by a four-quadrant setter, an auxialiary controlled feed-back current rectifier being connected in parallel to the current rectifer, and a current measuring device being provided at the input side of both current rectifiers, at least one of them being connected to a current control device, a parallel capacitor being connected to the auxiliary current rectifier on the DC side, characterized in that the semiconductors (3, 4, 5, 6) of the auxiliary rectifier (2) are designed for a switching frequency at least five times higher than the semiconductors of the current rectifier (1), and in that each current measuring device (35, 36) is connected to a summing means (7, 8) which is connected to a current control device (9, 10) which, on its output side, is connected to a controller (11, 12) for the semiconductors of the current rectifiers (1, 2), preferably a grid control set, and in that the output of a multiplier (14) is connected to the summing means (7) at the current rectifier (1), said multiplier (14) linking the amount of the nominal current value (13) with a reference sine (15) which is synchronized with the alternating voltage supplied to the current rectifiers (1, 2) and in that the input of the current control device (9) at the current rectifier (1), where the difference between the nominal value and the actual value appears, is connected to an inverter (16), whose output is connected to the summing means (8) at the auxiliary current rectifier (2), and in that the summing means (8) at the auxiliary current rectifier (2) is connected to the output of a multiplier (17) to which is connected the output of a voltage controller (18), said multiplier (17) linking the reference sine (15) with the output signal of the voltage controller (18), and in that the input of the voltage controller (18) is connected with the output of a linking device, which creates the difference of two voltages, one of which being said voltage across the parallel capacitor (20) at the auxiliary current rectifier (2) and the other voltage being a nominal value (21) for said voltage.

2. Circuit according to claim 1, characterized in that the two current rectifiers (1, 2) are connected at their input sides each to one secondary winding (22, 23) of a transformer (24) whose primary winding (25) is connected e.g. to the voltage of a contact line of a mains supply system for trains.

3. Circuit according to claim 1 or 2, characterized in that either a DC load or an AC rectifier (26) with a following AC load is connected after the auxiliary current rectifier (2).

## Revendications

1. Circuit de compensation de réaction au réseau ou de courant parasite produit par un convertisseur de courant commandé, respectivement par un convertisseur de courant quatre quadrants, dans un réseau d'alimentation, un convertisseur de courant auxiliaire commandé et susceptible de produire une réinjection électrique étant branché en parallèle du convertisseur de courant, côté entrée, et, dans le cas de deux convertisseurs de courant un organe de mesure de courant étant prévu côté entrée, au moins l'un des deux étant relié à un régulateur d'intensité et un condensateur parallèle étant raccordé au convertisseur de courant auxiliaire, du côté de la tension continue, caractérisé en ce que les semi-conducteurs (3, 4, 5, 6) du convertisseur de courant auxiliaire (2) sont conçus pour au moins la fréquence de commutation quintuple de celle des semi-conducteurs du convertisseur de courant (1), et en ce que chaque organe de mesure de courant (35, 36) est relié à un point de sommation (7, 8) raccordé à un régulateur de courant (9, 10) qui est relié, côté sortie, à une commande (11, 12) de préférence un jeu de commandes par grille, pour les semi-conducteurs du convertisseur de courant (1, 2), et en ce que la sortie d'un multiplicateur (14) est raccordée au point de sommation (7) pour le convertisseur de courant (1), le multiplicateur (14) combinant la valeur de consigne de courant (13) à un sinus de référence (15) qui est synchronisé à la tension alternative appliquée aux convertisseurs de courant (1, 2) et en ce que, dans le cas du convertisseur de courant (1), l'entrée du régulateur de courant (9) sur laquelle est appliquée la différence entre valeur de consigne et valeur réelle est reliée à un inverseur (16), dont la sortie est raccordée au point de sommation (8) concernant le convertisseur de courant auxiliaire (2) et en ce que, concernant le convertisseur de courant auxiliaire (2), le point de sommation (8) est relié à la sortie d'un multiplicateur (17), auquel est raccordée la sortie d'un régulateur de tension (18), le multiplicateur (17) combinant le signal sinusoïdal de référence et le signal de sortie du régulateur de tension (18), et en ce que l'entrée du régulateur de tension (18) est reliée à la sortie d'un point de combinaison (19) qui constitue la différence entre deux tensions, dont une tension est celle que l'on a au condensateur parallèle (20) pour le convertisseur de courant auxiliaire (2) et l'autre tension est une valeur de consigne (21) de cette tension.

2. Circuit selon la revendication 1, caractérisé en ce que les deux convertisseurs de courant (1, 2) sont raccordés respectivement côté entrée à un bobinage secondaire (22, 23) d'un transformateur (24) dont le bobinage primaire (25) est situé par exemple sur la tension de ligne de contact d'un réseau ferroviaire.

3. Circuit selon la revendication 1 ou 2, caractérisé en ce qu'en aval du convertisseur de courant auxiliaire (2) est mis en circuit, soit un consommateur de courant continu, soit un convertisseur continu alternatif (26), avec un consommateur aval .
